(19) Europäisches Patentamt
European Patent Office
Office européen des brevets

(11) **EP 2 125 613 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **08701477.5**

(22) Anmeldetag: **15.01.2008**

(51) Int Cl.:
***C01B 17/16*** (2006.01)

(86) Internationale Anmeldenummer:
**PCT/EP2008/050366**

(87) Internationale Veröffentlichungsnummer:
**WO 2008/087125 (24.07.2008 Gazette 2008/30)**

(54) **VERFAHREN UND VORRICHTUNG ZUR KONTINUIERLICHEN HERSTELLUNG VON SCHWEFELWASSERSTOFF**

METHOD AND DEVICE FOR CONTINUOUS PRODUCTION OF HYDROGEN SULPHIDE

PROCÉDÉ ET DISPOSITIF DE PRÉPARATION DE SULFURE D'HYDROGÈNE EN CONTINU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.01.2007 EP 07100587**

(43) Veröffentlichungstag der Anmeldung:
**02.12.2009 Patentblatt 2009/49**

(73) Patentinhaber: **BASF SE**
**67056 Ludwigshafen am Rhein (DE)**

(72) Erfinder:
• WÖLFERT, Andreas
  **74906 Bad Rappenau (DE)**
• JACHOW, Harald
  **64625 Bensheim (DE)**
• DRIESS, Heinz
  **67071 Ludwigshafen (DE)**

(56) Entgegenhaltungen:
| | |
|---|---|
| CS-B1- 263 599 | DE-A1- 10 245 164 |
| DE-C- 558 432 | FR-A- 2 844 208 |
| US-A- 2 876 071 | US-A- 5 686 056 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren und eine Vorrichtung zur kontinuierlichen Herstellung von Schwefelwasserstoff $H_2S$, wobei in einem bei der Herstellung anfallenden $H_2S$-haltigen Rohgasstrom Polysulfane ($H_2S_x$ mit x $\geq$ 2) enthalten sind.

Die Herstellung von Schwefelwasserstoff erfolgt im Stand der Technik z.B. durch das $H_2S$-Verfahren nach Girdler (Ullmann's Encyclopedia of Industrial Chemistry, Sixth Edition, 2003, Vol. 17, Seite 291). $H_2S$ wird dabei unkatalytisch aus den Elementen Schwefel und Wasserstoff in einer Kolonne mit Einbauten und einem im Wesentlichen horizontal ausgerichteten, erweiterten Sumpf hergestellt. In den mit siedendem Schwefel gefüllten Sumpf wird Wasserstoff eingeleitet, welcher Schwefel in die aufsteigende Gasphase strippt. Wasserstoff und aufsteigender Schwefel reagieren im Gasraum der Kolonne, wobei die dabei freiwerdende Reaktionswärme dem Produktgas durch Wäsche mit flüssigem Schwefel entzogen wird. Dazu wird aus dem Sumpf der Kolonne flüssiger Schwefel abgezogen, mit frischem, kaltem Schwefel gemischt und am Kopf der Kolonne aufgegeben. Das Produktgas, das weitgehend Schwefelwasserstoff enthält, wird in zwei Wärmetauschern abgekühlt.

Eine katalytische Herstellung von $H_2S$ wird in Angew. Chem.; 74 Jahrgang 1962; Nr. 4; Seite 151 beschrieben. Dabei wird Wasserstoff durch ein von außen temperiertes Schwefelbad geleitet. Der mit Schwefeldampf beladene Wasserstoff tritt durch Bohrungen in einen Katalysatorraum ein. Nicht abreagierter Schwefel wird nach Verlassen des Katalysatorraums in einem oberen Teil des $H_2S$-Auslassrohres kondensiert und gelangt über ein Rücklaufrohr in das Schwefelbad zurück. Der Katalysatorraum ist konzentrisch um das $H_2S$-Auslassrohr angeordnet.

Aus DE 1 113 446 ist die katalytische Herstellung von Schwefelwasserstoff durch Umsetzung eines stöchiometrischen Gemisches von Wasserstoff und Schwefel an einem Kobalt- und Molybdänsalz auf einem Träger enthaltenden Katalysator bei Temperaturen zwischen 300 und 400°C bekannt. Der Katalysator ist hierbei in Rohren angeordnet, die von dem Gemisch von Wasserstoff und Schwefel durchströmt werden. Das Schwefelbad hat eine Temperatur von 340 bis 360°C, wodurch eine stöchiometrische Mischung von Wasserstoff und Schwefel durch Durchleiten von Wasserstoff durch das Schwefelbad für die Herstellung von $H_2S$ erzeugt wird. Die bei der $H_2S$-Bildung freiwerdende Reaktionswärme wird durch direkten Wärmeaustausch genutzt, da die den Katalysator enthaltenden Rohre im Schwefelbad auf eine nicht näher beschriebene Art angeordnet sind.

In US 2,863,725 wird ein Verfahren zur Herstellung von $H_2S$ an einem Molybdän enthaltenden Katalysator beschrieben, wobei gasförmiger Wasserstoff in einen eine Schwefelschmelze enthaltenden Reaktor eingeleitet wird und durch die Schwefelschmelze in Form von Gasblasen aufsteigt. Die Menge an eingeleitetem Wasserstoff und die Temperatur der Schwefelschmelze, angegeben wird eine Temperatur unter 326°C, werden derart eingestellt, dass ein sich oberhalb der Schwefelschmelze in einer Gaszone ausbildendes Gasgemisch die Edukte Wasserstoff und Schwefel mit einem Überschuss an Wasserstoff über dem stöchiometrischen Reaktionsverhältnis enthält.

Bei $H_2S$-Synthesen aus Wasserstoff und Schwefel finden sich im Rohgas in der Regel als Nebenprodukte Polysulfane ($H_2S_x$). Beispielsweise können in einem dem Reaktor nachgeschalteten Gaskühler bei bestimmten Temperaturen bis zu 1000 Gewichts-ppm Disulfan $H_2S_2$ beziehungsweise höhere Sulfane $H_2S_x$ gebildet werden, die sich in Folgestufen unkontrolliert wieder zu $H_2S$ und Schwefel zersetzen, so dass unerwünschte Schwefelablagerungen in Rohrleitungen, Armaturen, Verdichtern, Wärmetauschern etc. auftreten.

DE 102 45 164 A1 bezieht sich auf ein Verfahren zur Umwandlung von Polysulfanen in $H_2S$ und Schwefel, wobei die Polysulfane $H_2S_x$, die in den bei der $H_2S$-Synthese anfallenden $H_2S$-haltigen Rohgasströmen enthalten sind, katalytisch in $H_2S$ und Schwefel umgewandelt werden. Dazu wird das $H_2S$-haltige Rohgas zum Beispiel mit einem geeigneten katalytisch wirksamen Festkörper in Kontakt gebracht, insbesondere mit A-Kohle, $Al_2O_3$, $SiO_2$ etc.

FR 28 44 208 B1 betrifft ein Verfahren zur Reinigung eines überwiegend Schwefelwasserstoff enthaltenden und durch Umsetzung von Wasserstoff und flüssigem Schwefel in einer technischen Vorrichtung erhaltenen Synthesegases, wobei dieses Gas durch einen Filter, das einen unter porösen Körnern von Aktivkohle, Aluminiumoxid und Siliciumdioxid ausgewählten Feststoff enthält, geleitet wird. Das Filtermaterial (zum Beispiel die Aktivkohle) ist nach Beladung mit Schwefel verbraucht und zum Beispiel durch Verbrennung zu entsorgen. Nachteilig sind dabei der hohe Wartungsaufwand für den Wechsel des Aktivkohlebettes, der kontinuierliche Verbrauch an Aktivkohle, die Entsorgungskosten und die Umweltschäden bei der Verbrennung der Kohle. Für die Dauer des Aktivkohlewechsels muss auf mindestens eine weitere Aktivkohlestation umgeschaltet werden.

US 5,686,056 bezieht sich auf ein Verfahren zum Reinigen von Schwefelwasserstoffgas mit Verunreinigungen, die Polysulfane umfassen. Das Verfahren umfasst das Leiten des Schwefelwasserstoffgases durch ein Filtermedium, das ein Molsieb umfasst, wobei die Polysulfane in Schwefelwasserstoff und Schwefel zersetzt werden und der dabei anfallende Schwefel in dem Filtermedium gehalten wird. Zum Entfernen von akkumuliertem Schwefel aus dem Filtermedium wird erwärmtes Wasserstoffgas in umgekehrter Richtung (verglichen mit der Richtung des Schwefelwasserstoffgases) durch das Filtermedium geleitet.

In Ullmann's Enzyklopädie der technischen Chemie, Verlag Chemie, Weinheim, 4. Auflage, Band 21, Seite 171 wird beschrieben, dass den Reaktor über Kopf verlassender Schwefelwasserstoff nach Passieren eines Direktaustauschers mit ca. 200 °C durch einen Koksfilter geleitet wird, an dem sich mitgerissener Schwefel abscheidet.

In DE 558 432 wird Schwefelwasserstoff hergestellt, indem Wasserstoff über eine Brause in flüssigen Schwefel geleitet wird. Die erzeugten Gase passieren einen Katalysator und werden zur Abscheidung von im Gas verbliebenem Schwefel aus dem Reaktor in einen Kühler geleitet. Aus dem Kühler wird der Schwefel zurück in den Sumpf des Reaktors geführt.

Aufgabe der vorliegenden Erfindung ist es, ein Verfahren und eine Vorrichtung zur Herstellung von Schwefelwasserstoff bereitzustellen, die die Nachteile des Standes der Technik vermeiden. Insbesondere ist es Aufgabe der Erfindung, ein Verfahren und eine Vorrichtung bereitzustellen, die eine Herstellung von möglichst reinem Schwefelwasserstoff mit möglichst geringen Ablagerungen verursachenden Schwefelanteilen im Gas mit möglichst geringen Kosten zu ermöglichen.

Diese Aufgabe wird erfindungsgemäß gelöst durch ein Verfahren zur kontinuierlichen Herstellung von Schwefelwasserstoff $H_2S$, wobei in einem bei der Herstellung anfallenden $H_2S$-haltigen Rohgasstrom Polysulfane ($H_2S_x$) enthalten sind, wobei der Rohgasstrom bei Temperaturen von 114 bis 165 °C, bevorzugt 123 bis 163 °C, besonders bevorzugt 127 bis 162 °C, insbesondere 130 bis 161 °C, ganz besonders bevorzugt 135 bis 160 °C durch in einem Behälter enthaltenes, katalytisch wirksames Material, besonders bevorzugt in dem Behälter enthaltene Aktivkohle und/oder in dem Behälter enthaltenes Molsieb, geleitet wird und dabei anfallender Schwefel im Sumpf des Behälters aufgefangen und zur Herstellung von $H_2S$ zurückgeführt wird, wobei eine Leitung zwischen einem Kühler und dem Reaktor bereitgestellt wird, durch die der Rohgasstrom in einer Richtung von dem Reaktor in den Kühler und durch die zurückgeführter Schwefel in einer entgegengesetzten Richtung von dem Kühler in den Reaktor geleitet wird.

Der $H_2S$-haltige Rohgasstrom kann dabei nach einem dem Fachmann bekannten Verfahren hergestellt werden, zum Beispiel nach Ullmann's Encyclopedia of industrial Chemistry, 6th Edition, Wiley-VCH Verlag (2003) Vol. 17, 291-292, oder nach US 2,876,071, DE 111 34 46, CS 263599 oder GB 1,193,040.

In dem $H_2S$-haltigen Rohgasstrom können als Verunreinigungen Polysulfane ($H_2S_x$ mit $x \geq 2$) enthalten sein. Diese bilden sich zum Beispiel innerhalb eines bestimmten Temperaturbereichs beim Abkühlen eines heißen $H_2S$-haltigen Rohgasstroms, der aus einem Reaktor geleitet wird, in dem die $H_2S$-Synthese erfolgt. Oberhalb von 350 °C ist $H_2S_x$ instabil und zerfällt in Schwefel und $H_2S$. Im Temperaturbereich von ca. 200 bis 290 °C reagiert $H_2S$ in dem Rohgasstrom mit S zu $H_2S_x$. Bei Temperaturen unter 170 °C spielt die $H_2S_x$-Bildung keine wesentliche Rolle.

Die in dem $H_2S$-haltigen Rohgasstrom enthaltenen Polysulfane sollen sich nicht bei Abkühlung in der zur Herstellung des $H_2S$ verwendeten Anlage niederschlagen und sich nicht nach einer bestimmten Verweilzeit in Schwefel und $H_2S$ zersetzen, da Schwefelablagerungen die Folge wären. Daher werden der $H_2S$-haltige Rohgasstrom und die darin enthaltenen Polysulfane erfindungsgemäß durch in dem dafür vorgesehenen Behälter enthaltenes, katalytisch wirksames Material geleitet, zur kontrollierten Umwandlung von Polysulfanen in $H_2S$ und Schwefel. Bevorzugt wird als katalytisch aktives Material Aktivkohle und/oder ein Molsieb und/oder ein Hydrierkatalysator verwendet, besonders bevorzugt Aktivkohle und/oder ein Molsieb. Als Hydrierkatalysator dient vorzugsweise ein Katalysatormaterial, das mindestens ein Element ausgewählt aus der Gruppe Ni, W, Mo, Co und V in oxidischer oder sulfidischer Form auf einem Träger aus Aluminiumoxid oder Siliziumoxid enthält. Ganz besonders bevorzugt werden der $H_2S$-haltige Rohgasstrom und die darin enthaltenen Polysulfane durch in einem Behälter enthaltene Aktivkohle und/oder Molsieb geleitet, die als Katalysator zur kontrollierten Umwandlung von Polysulfanen in $H_2S$ und Schwefel dienen. In dem das katalytisch wirksame Material, bevorzugt die Aktivkohle und/oder das Molsieb enthaltenden Behälter fällt daher aus der Umwandlung der Polysulfane Schwefel an und es können zusätzlich gegebenenfalls in dem Rohgasstrom enthaltene, mitgerissene Schwefeltropfen anfallen oder ein für die Synthese bereitgestellter Schwefelüberschuss. Vorzugsweise werden jedoch mitgerissene Schwefeltropfen und ein Schwefelüberschuss bereits in einem dem das katalytisch wirksame Material, bevorzugt die Aktivkohle und/oder das Molsieb, enthaltenden Behälter vorgeschalteten Kühler abgeschieden.

Erfindungsgemäß wird der Rohgasstrom bei Temperaturen von 114 bis 165 °C, bevorzugt 123 bis 163 °C, besonders bevorzugt 127 bis 162 °C, insbesondere 130 bis 161 °C, ganz besonders bevorzugt 135 bis 160 °C durch das katalytisch wirksame Material, bevorzugt durch die Aktivkohle und/oder das Molsieb geleitet. Dabei handelt es sich um die Temperaturen des katalytisch wirksamen Materials. Durch das Halten der Temperatur des Gasstroms oberhalb von 114 °C während des Durchströmens der Aktivkohle und/oder des Molsiebs wird sichergestellt, dass der anfallende Schwefel (aus der $H_2S_x$-Zersetzung und gegebenenfalls aus dem Rohgasstrom) in der Schmelze bleibt. Durch das Halten der Temperatur des Gasstroms unterhalb von 165 °C, insbesondere unterhalb von 160 °C bleibt die Viskosität des mit $H_2S$ gesättigten Schwefels ausreichend gering. Dadurch kann der anfallende Schwefel aus dem katalytisch wirksamen Material, bevorzugt aus der Aktivkohle (zum Beispiel einem Aktivkohlebett) und/oder aus dem Molsieb ablaufen und in den Sumpf des das katalytisch wirksame Material, bevorzugt die Aktivkohle und/oder das Molsieb enthaltenden Behälters gelangen. Der in dem Sumpf aufgefangene Schwefel wird erfindungsgemäß zur Herstellung von $H_2S$ (vorzugsweise in den zur $H_2S$-Synthese verwendeten Reaktor) zurückgeführt.

Durch das kontinuierliche Abführen des Schwefels aus dem das katalytisch wirksame Material, bevorzugt die Aktivkohle und/oder das Molsieb enthaltenden Behälter wird das katalytisch wirksame Material, bevorzugt die Aktivkohle und/oder das Molsieb nicht oder kaum mit Schwefel beladen. Ein Wechsel des katalytisch wirksamen Materials, bevorzugt der Aktivkohle und/oder des Molsiebs ist daher nicht oder nur selten notwendig, so dass ein geringer Verbrauch an katalytisch wirksamem Material erreicht wird und Entsorgungskosten und Umweltschäden zum Beispiel bei Verbrennung der Kohle weitgehend vermieden werden können. Ferner kann auf einen zweiten Behälter mit katalytisch wirksamem Material verzichtet werden, auf den beim Wechsel des katalytisch wirksamen Materials in dem ersten Behälter umgeschaltet werden müsste. Durch das Zurückführen des in dem Behälter anfallenden Schwefels in die Synthesereaktion kann der Rohstoffverbrauch gesenkt werden.

Die Erfindung bezieht sich weiterhin auf eine Vorrichtung zur kontinuierlichen Herstellung von Schwefelwasserstoff $H_2S$, umfassend einen Reaktor zum Umsetzen von Schwefel und Wasserstoff, einen mit dem Reaktor verbundenen Kühler zum Kühlen eines aus dem Reaktor geleiteten $H_2S$-haltigen Rohgasstroms auf 123 bis 165 °C, bevorzugt 127 bis 163 °C, besonders bevorzugt 130 bis 162 °C, insbesondere 135 bis 161 °C, ganz besonders bevorzugt 150 bis 160 °C, einen mit dem Kühler verbundenen, katalytisch wirksames Material, bevorzugt Aktivkohle und/oder Molsieb enthaltenden Behälter mit einem Sumpf zum Auffangen von in dem Behälter bei 114 bis 165 °C, bevorzugt 123 bis 163 °C, besonders bevorzugt 127 bis 162 °C, insbesondere 130 bis 161 °C, ganz besonders bevorzugt 135 bis 160 °C, aus dem Polysulfane ($H_2S_x$) enthaltenden Rohgasstrom anfallendem Schwefel und eine mit dem Sumpf des Behälters verbundene Leitung, die in den Kühler oder in den Reaktor mündet, zum Zurückführen von Schwefel in den Reaktor. Die erfindungsgemäße Vorrichtung wird zum Durchführen des erfindungsgemäßen Verfahrens verwendet.

In dem Reaktor wird die Reaktion zur Synthese von $H_2S$ durchgeführt. Aus dem Reaktor wird ein $H_2S$-haltiger Rohgasstrom in den Kühler geleitet. Der Kühler kühlt diesen Rohgasstrom auf 114 bis 165 °C ab. Aus dem Kühler wird ein $H_2S$-haltiger Rohgasstrom, der Polysulfane ($H_2S_x$) enthält, in den katalytisch wirksames Material, bevorzugt Aktivkohle und/oder Molsieb enthaltenden Behälter geleitet. Der in dem Behälter bei 114 bis 165 °C, bevorzugt 123 bis 163 °C, besonders bevorzugt 127 bis 162 °C, insbesondere 130 bis 161 °C, ganz besonders bevorzugt 135 bis 160 °C anfallende Schwefel (aus der Zersetzung der Polysulfane und gegebenenfalls aus dem Abscheiden eines Schwefelüberschusses und gegebenenfalls aus dem Abscheiden eines Schwefelmitrisses, bevorzugt aus der Zersetzung der Polysulfane) wird im Sumpf des Behälters aufgefangen und indirekt über den Kühler oder direkt in den Reaktor in die Synthesereaktion zurückgeführt. Bevorzugt wird der anfallende Schwefel indirekt über den Kühler in den Reaktor zurückgeführt. Die Abscheidung von mitgerissenen Schwefeltropfen und von überschüssigem Schwefel erfolgt vorzugsweise in einem dem das katalytisch wirksame Material enthaltenden Behälter vorgeschalteten Kühler (Teilkondensator).

Gemäß einer bevorzugten Ausführungsform der vorliegenden Erfindung wird der Rohgasstrom mit einer Eintrittstemperatur von 123 bis 165 °C, bevorzugt 127 bis 163 °C, besonders bevorzugt 130 bis 162 °C, insbesondere 135 bis 161 °C, ganz besonders bevorzugt 150 bis 160 °C in den Behälter eingeleitet, durch das katalytisch wirksame Material, bevorzugt Aktivkohle und/oder Molsieb hindurchgeleitet und mit einer Austrittstemperatur von 121 bis 160 °C, bevorzugt 124 bis 158 °C, besonders bevorzugt 126 bis 157 °C, insbesondere 130 bis 156 °C, ganz besonders bevorzugt 140 bis 155 °C aus dem Behälter herausgeleitet. Dabei gibt der Rohgasstrom seine Wärme zum Beispiel an einen Sekundärkreislauf ab, der damit beispielsweise auf eine Temperatur von 110 bis 120 °C aufgeheizt wird und mit dem der Kühler betrieben wird.

Das katalytisch wirksame Material, bevorzugt die Aktivkohle und/oder das Molsieb wird vorzugsweise von unten (vom Sumpf her) mit dem Rohgasstrom angeströmt, um zu gewährleisten, dass der am Kopf des Behälters austretende gereinigte Rohgasstrom keinen Mitriss des in dem Behälter abgeschiedenen Schwefels enthält. Die Reinigung des Polysulfane enthaltenden Rohgasstroms erfolgt vorzugsweise einstufig in einem einzigen katalytisch wirksames Material, bevorzugt Aktivkohle und/oder Molsieb enthaltenden Behälter.

Das katalytisch wirksame Material, bevorzugt die Aktivkohle und/oder das Molsieb liegt in dem Behälter vorzugsweise als Festbett mit einer Schütthöhe von mindestens 1 m, bevorzugt von mindestens 1,5 m vor. Das Verhältnis der Höhe zum Durchmesser der Schüttung beträgt vorzugsweise 0,1 bis 10, bevorzugt 0,2 bis 7, besonders bevorzugt 0,3 bis 5, ganz besonders bevorzugt 0,4 bis 5, insbesondere 0,5 bis 2. Der Druckverlust über das katalytisch wirksame Material, bevorzugt die Aktivkohle-Schüttung und/oder die Molsieb-Schüttung erfüllt vorzugsweise die Bedingung

$$\frac{\rho}{2}v^2 \le f \bullet \Delta p$$

mit f zwischen 0,05 und 0,5, bevorzugt zwischen 0,1 und 0,3, wobei $\rho$ die Dichte des Rohgasstroms, v die Einströmgeschwindigkeit des Rohgasstroms im Eintrittsquerschnitt des Behälters und $\Delta p$ den Druckverlust über das katalytisch wirksame Material bezeichnet.

Es ist als katalytisch wirksames Material z.B. jede dem Fachmann bekannte Aktivkohle verwendbar, insbesondere aus Holz, Steinkohle, Torf oder Kokosnussschalen hergestellte Aktivkohle. Es handelt sich vorzugsweise um Aktivkohleteilchen in einer Größe von 2 bis 15 mm, bevorzugt 3 bis 5 mm. Die Aktivkohle kann beispielsweise in Form von kleinen Zylindern mit einem Durchmesser von 4 mm vorliegen. Das Porenvolumen der Aktivkohle beträgt vorzugsweise mehr als 30 $cm^3$/100 g. Die innere Oberfläche der Aktivkohle ist bevorzugt >900 $m^2$/g, besonders bevorzugt >1100

m$^2$/g Die Aktivkohle kann eine oder mehrere Aktivkohlesorten umfassen. Beispielsweise können eine erste Schicht aus einer ersten Aktivkohlesorte und eine darauf angeordnete zweite Schicht aus einer zweiten Aktivkohlesorte in dem Aktivkohlebehälter verwendet werden.

Als katalytisch wirksames Material geeignete Molsiebe werden zum Beispiel in Robert H. Perry, et al. Chemical Engineers Handbook, McGraw-Hill Book Company, 6th edition, beschrieben. Bevorzugt werden Molsiebe vom Typ 3A, Typ 4A, Typ 5A, Typ 10A, Typ 13X, Silicalite, dealuminierte Y-Zeolithe, Mordenite und Chabazite. Besonders bevorzugt ist ein Molsieb vom Typ 4A.

Vorzugsweise wird der H$_2$S-haltige Rohgasstrom durch den das katalytisch wirksame Material, vorzugsweise die Aktivkohle und/oder das Molsieb enthaltenden Behälter mit einer Leerrohrverweilzeit von 1 bis 200 s, bevorzugt von 2 bis 100 s, besonders bevorzugt von 5 bis 80 s, ganz besonders bevorzugt von 10 bis 50 s geleitet. Die Leerrohrgeschwindigkeit beträgt dabei vorzugsweise 0,01 bis 1 m/s, bevorzugt 0,02 bis 0,5 m/s, besonders bevorzugt 0,04 bis 0,3 m/s, ganz besonders bevorzugt 0,05 bis 0,2 m/s. Der Druck in dem das katalytisch wirksame Material, vorzugsweise die Aktivkohle und/oder das Molsieb enthaltenden Behälter beträgt vorzugsweise 0,2 bis 20 bar, bevorzugt 0,4 bis 10 bar, besonders bevorzugt 0,8 bis 6 bar, ganz besonders bevorzugt 1 bis 5 bar absolut. Am Eingang des Behälters können eine Gasverteilereinrichtung, enthaltend Umlenkbleche, Einlassrohre und/oder perforierte Einlassrohre vorgesehen sein, um den Rohgasstrom in dem Behälter zu verteilen.

Gemäß einer bevorzugten Ausführungsform der vorliegenden Erfindung umfasst die erfindungsgemäße Vorrichtung einen Reaktor zur kontinuierlichen Herstellung von H$_2$S durch Umsetzung eines Eduktgemischs, welches im Wesentlichen gasförmigen Schwefel und Wasserstoff enthält, an einem Katalysator, wobei der Reaktor eine Schwefelschmelze in einem unteren Teil des Reaktors umfasst, in welche mittels einer Zuführeinrichtung gasförmiger Wasserstoff eingeleitet werden kann. Der Katalysator ist (vorzugsweise als Festbett) in mindestens einem U-förmigen Rohr angeordnet, welches teilweise in Kontakt mit der Schwefelschmelze steht, wobei das mindestens eine U-förmige Rohr mindestens eine oberhalb der Schwefelschmelze angeordnete Eintrittsöffnung in einem Schenkel aufweist, durch die das Eduktgemisch aus einem Eduktbereich des Reaktors in das U-förmige Rohr eintreten kann, einen Strömungsweg innerhalb des mindestens einen U-förmigen Rohrs aufweist, entlang dessen das Eduktgemisch in einem Reaktionsbereich umgesetzt werden kann, in dem der Katalysator angeordnet ist, und das mindestens eine U-förmige Rohr mindestens eine Austrittsöffnung in einem anderen Schenkel aufweist, durch die ein Produkt in einen (von dem Eduktbereich getrennten) Produktbereich austreten kann.

Der Reaktor umfasst vorzugsweise einen zylinder- oder prismenförmigen zentralen Körper, umgeben von einem Reaktormantel, der an beiden Enden durch je eine Haube geschlossen ist. Die Hauben können jede geeignete Form aufweisen, beispielsweise halbkugelförmig oder konisch ausgebildet sein.

Der Reaktor ist vorzugsweise in einem unteren Teil mit einer Schwefelschmelze gefüllt. In die Schwefelschmelze kann über eine Zuführeinrichtung gasförmiger Wasserstoff eingeleitet werden, wobei sich oberhalb der Schwefelschmelze ein Eduktgemisch enthaltend im Wesentlichen gasförmigen Schwefel und gasförmigen Wasserstoff in einem Eduktbereich sammelt, der mit der Schwefelschmelze über eine Phasengrenze in Kontakt steht und der nach oben vorzugsweise durch eine Unterteilung, beispielsweise durch einen Boden, begrenzt wird. In einer bevorzugten Ausführungsform der vorliegenden Erfindung ist der Boden in einem oberen Teil des Reaktors mit dem Reaktormantel verbunden, bevorzugt im oberen Drittel, besonders bevorzugt im oberen Viertel des Reaktorinnenraums.

In dem bevorzugt verwendeten Reaktor ist mindestens ein U-förmiges Rohr vorgesehen, das zumindest teilweise in Kontakt mit der Schwefelschmelze steht. Der Reaktor ist daher als eine Art Rohrbündelreaktor ausgebildet, mit Kontaktrohren, die U-förmig gestaltet sind. Ein solches U-förmiges Rohr weist zwei Schenkel auf, die an ihren unteren Enden durch einen bogenförmigen Bereich miteinander verbunden sind. Die U-förmigen Rohre können jeweils unterschiedlich lange oder vorzugsweise gleich lange Schenkel aufweisen. Die U-förmigen Rohre können z.B. einen Schenkeldurchmesser zwischen 2 und 20 cm, insbesondere zwischen 2,5 und 15 cm, besonders bevorzugt zwischen 5 und 8 cm aufweisen. Das mindestens eine U-förmige Rohr ist vorzugsweise senkrecht in dem Reaktor angeordnet, wobei sich der bogenförmige Bereich unten und die beiden Enden der Schenkel oben befinden.

In dem Zusammenhang mit der vorliegenden Erfindung bedeutet "in Kontakt stehen", dass ein Wärmeaustausch zwischen der Schwefelschmelze und dem Innenraum des Rohrs über die Wandung des Rohrs stattfinden kann. Das mindestens eine U-förmige Rohr taucht vorzugsweise teilweise in die Schwefelschmelze ein.

Innerhalb des mindestens einen U-förmigen Rohrs ist vorzugsweise ein Katalysator zur Umsetzung von Wasserstoff und Schwefel zu H$_2$S angeordnet, wodurch ein Reaktionsbereich bereitgestellt wird. Als Reaktionsbereich wird im Zusammenhang mit der vorliegenden Erfindung derjenige Bereich innerhalb der U-förmigen Rohre bezeichnet, in dem sich der Katalysator befindet. Die Umsetzung der Edukte erfolgt hauptsächlich in dem Reaktionsbereich, der den Katalysator enthält. Die Bereitstellung eines Reaktionsbereichs in U-förmigen Rohren erlaubt eine bzgl. der Reaktorlänge kompakte Bauweise des Reaktors, da der zur Umsetzung von Wasserstoff mit Schwefel zu H$_2$S vorgesehene Reaktionsbereich auf beide Schenkel je eines U-förmigen Rohrs aufgeteilt werden kann. Durch Einsatz des Katalysators kann die Umsetzung zu H$_2$S bei moderaten Temperaturen und bei niedrigem Druck durchgeführt werden. Der Katalysator ist vorzugsweise in Form eines geschütteten Festbettes in dem mindestens einen U-förmigen Rohr angeordnet. Geeignete Katalysatoren sind beispielsweise Kobalt und Molybdän enthaltende Katalysatoren auf einem Träger, die als Formkörper beliebiger Gestalt eingesetzt werden. Beispielsweise beträgt der Durchmesser der Formkörper 2 bis 12 mm, insbesondere zwischen 3 und 10 mm, besonders bevorzugt zwischen 4 und 8 mm und die Länge liegt vorzugsweise zwischen 2 und 12 mm, insbesondere zwischen 3 und 10 mm, besonders bevorzugt zwischen 4 und 8 mm.

Bei der Herstellung von Schwefelwasserstoff unter Verwendung der bevorzugten Ausführungsform des Reaktors tritt das Eduktgemisch aus dem Eduktbereich in einen Schenkel des mindestens einen U-förmigen Rohrs durch mindestens eine Eintrittsöffnung ein. Die Eintrittsöffnung ist in einem Schenkel des mindestens einen U-förmigen Rohres oberhalb der Schwefelschmelze angeordnet. Die Eintrittsöffnung mündet aus dem Eduktbereich in den einen Schenkel des U-förmigen Rohrs. Der Abstand zwischen der Phasengrenze der Schwefelschmelze und der Eintrittsöffnung des U-förmigen Rohrs wird so gewählt, dass möglichst wenig flüssiger Schwefel in Form von Tröpfchen mit dem Strom des Eduktgemischs in den Innenraum der U-förmigen Rohre mitgerissen wird. Der Abstand zwischen Eintrittsöffnung und Phasengrenze der Schwefelschmelze liegt vorzugsweise zwischen 0,3 und 3 m, insbesondere zwischen 0,6 und 2,5 m, besonders bevorzugt zwischen 0,9 und 2 m.

Bei der Herstellung von Schwefelwasserstoff unter Verwendung der bevorzugten Ausführungsform des Reaktors durchströmt das Eduktgemisch das U-förmige Rohr entlang eines Strömungsweges, d.h. es durchströmt zunächst nach dem Eintritt durch die Eintrittsöffnung einen Schenkel des U-förmigen Rohres von oben nach unten, tritt durch den bogenförmigen Bereich des U-förmigen Rohrs in den zweiten Schenkel ein und durchströmt anschließend den zweiten Schenkel von unten nach oben. Das Eduktgemisch wird hauptsächlich in dem Reaktionsbereich, der innerhalb des U-förmigen Rohres enthalten ist, an dem dort angeordneten Katalysator umgesetzt. Durch eine Austrittsöffnung in dem zweiten Schenkel des U-förmigen Rohrs tritt das das Produkt enthaltende Gas in einen (vorzugsweise oberhalb der Schwefelschmelze und oberhalb des Eduktbereichs in dem Reaktor angeordneten) Produktbereich ein, der von dem Eduktbereich (z.B. durch einen Boden) getrennt ist.

Dem Reaktor wird vorzugsweise über eine geeignete Zuführeinrichtung gasförmiger Wasserstoff und flüssiger Schwefel zugeführt. An geeigneter Stelle wird das Produkt Schwefelwasserstoff, beispielsweise an einer oberen Haube, aus dem Produktbereich des Reaktors geleitet.

Die beiden Schenkel eines U-förmigen Rohres sind vorzugsweise jeweils an ihrem oberen Ende mit einem Boden des Reaktors verbunden, der wiederum in einem oberen Teil des Reaktors an dem Reaktormantel in geeigneter Weise befestigt ist. Der Boden unterteilt den Reaktor vorzugsweise in zwei Teilbereiche, insbesondere legt er einen darüber liegenden Produktbereich fest. Die bevorzugte Befestigung des mindestens einen U-förmigen Rohrs an einem mit dem Reaktormantel verbundenen Boden erlaubt thermische Längenänderungen des Reaktors und der U-förmigen Rohre unabhängig voneinander, da das U-Rohrbündel nur über den Boden am Mantel des Reaktors befestigt ist, so dass bei der Konstruktion des Reaktors auf Kompensatoren verzichtet werden kann. Durch die Verbindung der U-förmigen Rohre mit dem Boden an den oberen Enden ihrer Schenkel wird vorteilhafterweise erreicht, dass sich die Rohre entsprechend der Schwerkraft stabilisieren.

Gemäß einer bevorzugten Ausführungsform der vorliegenden Erfindung ist in einem oberen Abschnitt des Reaktors, vorzugsweise nahe der oberen Haube, ein Boden angeordnet, der den Reaktorinnenraum in einen darunter liegenden unteren Teilbereich und einen darüber liegenden oberen Teilbereich einteilt.

Der obere Teilbereich enthält vorzugsweise den Produktbereich, der während des Betriebs des Reaktors hauptsächlich das Produkt Schwefelwasserstoff enthält. Mit dem Produktbereich steht jeweils ein Schenkel der U-förmigen Rohre in offener Verbindung.

Der untere Teilbereich des Reaktors enthält vorzugsweise den Eduktbereich direkt unterhalb des Bodens und darunter eine Schwefelschmelze, in die flüssiger Schwefel aus einer externen Quelle und/oder als Rücklauf eingespeist wird. Die U-förmigen Rohre stehen teilweise in thermischem Kontakt mit der Schwefelschmelze, vorzugsweise sind sie teilweise direkt in der Schwefelschmelze angeordnet, tauchen also in die Schwefelschmelze ein. Somit findet eine Übertragung der bei der exothermen Reaktion zu $H_2S$ freiwerdenden Wärmeenergie über das mindestens eine U-förmige Rohr in die umgebende Schwefelschmelze statt. Die Reaktionswärme wird für eine Verdampfung des darin enthaltenen Schwefels genutzt. Diese Wärmekopplung ermöglicht ein energetisch günstiges Verfahren, bei dem externe Wärmezufuhr erheblich reduziert oder nicht notwendig ist. Gleichzeitig kann eine Überhitzung des Katalysators vermieden werden, wodurch sich die Standzeiten des Katalysators erhöhen.

Für eine gute Übertragung der Wärmeenergie wird vorzugsweise der Wärmewiderstand der Katalysatorschüttung im Reaktionsbereich möglichst gering gehalten. Vorzugsweise wird für die Umsetzung der Edukte zu $H_2S$ eine Vielzahl von Katalysator enthaltenden U-förmigen Rohren bereitgestellt, so dass der jeweilige Weg vom Kern der Katalysatorschüttung zur Wand des Rohrs gering ist. Vorzugsweise liegt ein Verhältnis der Summe der Querschnittsflächen aller Kontaktrohre (bzw. aller Schenkel der U-förmigen Kontaktrohre) bezogen auf die Querschnittsfläche des (vorzugsweise zylindrischen) Reaktorkörpers zwischen 0,05 und 0,9, insbesondere zwischen 0,15 und 0,7, besonders bevorzugt zwischen 0,2 und 0,5, ganz besonders bevorzugt zwischen 0,25 und 0,4.

Damit ein ausreichender thermischer Kontakt für die Wärmeübertragung von dem U-förmigen Rohr in die umgebende Schwefelschmelze besteht, wird angestrebt, dass 20 bis 100 % der äußeren Mantelfläche eines jeweiligen U-förmigen Rohres entlang des den Katalysator enthaltenden Reaktionsbereichs in Kontakt mit der Schwefelschmelze steht. Damit die Wärmeübertragung in die Schwefelschmelze gut funktioniert, sollte dort, wo die Reaktion im U-förmigen Rohr stattfindet, die äußere Mantelfläche des U-förmigen Rohrs entlang des den Katalysator enthaltenden Reaktionsbereichs zu mehr als 20 %, bevorzugt zu mehr als 50%, besonders bevorzugt zu mehr als 80% von der Schwefelschmelze umgeben sein. Bei einem zu geringen Füllstand der Schwefelschmelze in dem Reaktor und damit einem zu geringen Kontakt von U-förmigen Rohr und Schwefelschmelze besteht die Gefahr, dass die Reaktionswärme nicht ausreichend abgeführt wird.

In Strömungsrichtung des Eduktgemischs innerhalb des mindestens einen U-förmigen Rohres kann das Eduktgemisch nach dem Eintreten in das U-förmige Rohr zunächst eine Inertschüttung durchströmen, wobei eventuell mitgerissener, in Form von Tröpfchen enthaltener flüssiger Schwefel an dieser Inertschüttung aus dem Eduktgemisch abgeschieden wird. Beispielsweise kann ein Anteil an flüssigem Schwefel in dem gasförmigen Wasserstoff und Schwefel enthaltenden Eduktgemisch von bis zu 100.000 Gew.-ppm vorliegen. Für die Schwefeltropfenabscheidung ist bevorzugt ein Anteil der Inertschüttung, bezogen auf die Gesamtschüttung aus Inertschüttung und Katalysatorschüttung, von 1 bis 30 %, insbesondere von 2 bis 25 %, bevorzugt von 5 bis 20 %, besonders bevorzugt von 8 bis 16 % in dem mindestens einen U-förmigen Rohr vorgesehen. Die Inertschüttung kann aus Körpern beliebiger Gestalt, beispielsweise aus Satteln oder vorzugsweise aus Kugeln, bestehen, welche aus einem geeigneten Material, beispielsweise Zirkonoxid oder vorzugsweise Aluminiumoxid, sind.

Vorzugsweise wird gasförmiger Wasserstoff über eine Zuführeinrichtung in die Schwefelschmelze in den Reaktor eingeleitet und über eine Verteilereinrichtung in der Schwefelschmelze verteilt.

Die Verteilereinrichtung umfasst vorzugsweise eine in dem Reaktor horizontal angeordnete Verteilerplatte und einen sich nach unten erstreckenden Rand. Der unterhalb der Verteilereinrichtung eingeleitete Wasserstoff staut sich unterhalb der Verteilerplatte zu einer Wasserstoffblase in dem Raum auf, der durch den sich nach unten erstreckenden Rand und die Verteilerplatte begrenzt wird.

Die Zuführeinrichtung umfasst vorzugsweise ein in dem Reaktor senkrecht angeordnetes, an beiden Enden offenes Rohr, welches unterhalb der Verteilereinrichtung angeordnet ist und dessen oberes Ende vorzugsweise in den Raum, der von der Verteilerplatte und dem sich nach unten erstreckenden Rand begrenzt wird, hineinragt und besonders bevorzugt in die Wasserstoffblase hineinragt. Durch ein Hineinragen in den Raum unter der Verteilerplatte und insbesondere in die darunter ausgebildete Wasserstoffblase wird in vorteilhafter Weise ein ungleichmäßiger Wasserstoffeintrag in die Schwefelschmelze vermieden.

In das senkrechte Rohr der Zuführeinrichtung mündet vorzugsweise seitlich ein schräg verlaufendes Einleitrohr, durch welches der Wasserstoff von außerhalb des Reaktors eingeleitet wird. Die Zuführeinrichtung ist vorteilhafter Weise so gestaltet, dass in das senkrecht angeordnete Rohr eintretender Schwefel frei nach unten abfließen kann, ohne die Zuführeinrichtung für den Wasserstoff zu verstopfen. Der Wasserstoff steigt in dem senkrecht angeordneten Rohr nach oben und sammelt sich unterhalb der Verteilereinrichtung.

Die Verteilereinrichtung umfasst vorzugsweise eine in dem Reaktor horizontal angeordnete Verteilerplatte (vorzugsweise mit Durchgangsöffnungen) und einen sich nach unten erstreckenden Rand. Die vorzugsweise ebene Verteilerplatte erstreckt sich vorzugsweise nahezu über die gesamte Querschnittsfläche des Reaktors, wobei zwischen Reaktormantel und Verteilereinrichtung ein Spalt verbleibt. Der Spalt zwischen dem Rand der Verteilereinrichtung und dem Reaktormantel hat vorzugsweise eine Breite zwischen 1 und 50 mm, insbesondere zwischen 2 und 25 mm, besonders bevorzugt zwischen 5 und 10 mm. Die Form der Verteilerplatte richtet sich nach der Geometrie des Reaktors, in welchem sie angeordnet wird. Sie kann beispielsweise kreisförmig oder mehreckig sein oder jede andere beliebige Form aufweisen. Vorzugsweise können am Außenumfang der Verteilerplatte Aussparungen vorgesehen sein, welche Durchführungsöffnungen z.B. für eine Wasserstoffeinleitung, eine Schwefeleinleitung und eine Schwefelrückführung bereitstellen. Somit kann der Spalt zwischen Verteilereinrichtung und Reaktormantel nur eine geringe Breite aufweisen, so dass ein starkes Schwingen der Verteilereinrichtung in dem Reaktor vermieden wird. Der unterhalb der Verteilereinrichtung eingeleitete Wasserstoff staut sich unterhalb dieser Verteilerplatte zu einer Wasserstoffblase in dem Raum auf, der durch den sich nach unten erstreckenden Rand und der Verteilerplatte begrenzt wird. Vorzugsweise wird die Verteilerplatte in dem Reaktor horizontal angeordnet, so dass die sich unterhalb der Verteilerplatte aufstauende Wasserstoffblase nahezu konstante Höhe aufweist.

Der aufgestaute Wasserstoff wird über den sich nach unten erstreckenden Rand, wenn die Wasserstoffblase eine gewisse Höhe erreicht hat, und/oder durch in der Verteilerplatte vorgesehene Durchgangsöffnungen in der Schwefelschmelze verteilt. Der Wasserstoff aus der Wasserstoffblase kann über den Rand durch einen Spalt zwischen Verteilereinrichtung und Reaktormantel in der Schwefelschmelze verteilt werden. Vorzugsweise ist der Randbereich der Verteilereinrichtung zackenförmig ausgebildet, wodurch der aufgestaute Wasserstoff in feine Gasblasen verteilt dispergiert werden kann.

In einer bevorzugten Ausführungsform enthält die vorzugsweise in dem Reaktor horizontal angeordnete Verteilerplatte der Verteilereinrichtung Durchgangsöffnungen. Durch die Durchgangsöffnungen in der Verteilerplatte dispergiert der aufgestaute Wasserstoff gleichmäßig verteilt aus der Wasserstoffblase in die über der Verteilerplatte befindliche Schwefelschmelze. Die Anzahl der Durchgangsöffnungen in der Verteilerplatte richtet sich unter anderem nach dem Volumenstrom des eingeleiteten Wasserstoffs und beträgt vorzugsweise 2 bis 100, insbesondere 4 bis 50, besonders bevorzugt 8 bis 20 pro 100 Norm-m$^3$/h. Die Durchgangsöffnungen können z.B. kreisförmig oder als Schlitze ausgebildet sein, wobei bevorzugte Durchmesser bzw. Schlitzbreiten bei 2 bis 30 mm, bevorzugt 5 bis 20 mm, besonders bevorzugt 7 bis 15 mm liegen. Die Durchgangsöffnungen sind in der Verteilerplatte vorzugsweise regelmäßig angeordnet. Der Flächenanteil der Durchgangsöffnungen, bezogen auf die Fläche der Verteilerplatte, liegt vorzugsweise zwischen 0,001 und 5 %, bevorzugt zwischen 0,02 und 1 %, besonders bevorzugt zwischen 0,08 und 0,5 %.

Um eine gute Durchmischung der Schwefelschmelze durch den aufsteigenden Wasserstoff zu erreichen und somit ein möglichst effizientes Strippen des Schwefels in den aufsteigenden Wasserstoff zu gewährleisten, liegt die Gasgeschwindigkeit des durch die Durchgangsöffnungen dispergierten Wasserstoffs vorzugsweise bei 20 bis 500 m/s, insbesondere 50 bis 350 m/s, bevorzugt 90 bis 350 m/s, besonders bevorzugt 150 bis 250 m/s.

Kommt es insbesondere bei einer Temperaturabsenkung zum Eindringen von Schwefel in die Durchgangsöffnungen, der sich in den Durchgangsöffnungen verfestigt, ist die Wasserstoffverteilung an der Verteilereinrichtung durch die Durchgangsöffnungen gehemmt. Der aufgestaute Wasserstoff kann dann auch über den Randbereich des sich nach unten erstreckenden Randes in die Schwefelschmelze dispergieren, wobei der Wasserstoff aus der Wasserstoffblase dann in der in einem Spalt zwischen Verteilereinrichtung und Reaktormantel enthaltenen Schwefelschmelze verteilt wird. Vorzugsweise ist der Randbereich der Verteilereinrichtung zackenförmig ausgebildet, wodurch der darunter aufgestaute Wasserstoff in feine Gasblasen verteilt dispergiert.

Beim einfachen Einleiten von Wasserstoff z.B. über ein senkrechtes Einleitrohr ohne eine derartige Verteilereinrichtung in die Schwefelschmelze kann sich eine inhomogene Wasserstoffverteilung ergeben. In der Nähe des Einleitrohres steigen in der Schwefelschmelze große Blasen von Wasserstoff auf. In anderen Regionen der Schwefelschmelze liegt dann kaum Wasserstoff vor. Dadurch können Schwingungen der U-förmigen Rohre angeregt werden. Die vorzugsweise in dem erfindungsgemäßen Reaktor enthaltene, wie eine nach unten offene Glocke gestaltete Verteilereinrichtung dient daher auch zur Stabilisierung der U-förmigen Rohre des Rohrbündels in der bevorzugten Ausführungsform des Reaktors.

Um eine größere Stabilität der U-förmigen Rohre zu erzielen, kann das mindestens eine U-förmige Rohr nahe seinem unteren bogenförmigen Bereich mit der Verteilereinrichtung verbunden werden, die durch ihre Dimensionierung den Schwingungsbereich des U-förmigen Rohrs bzw. des entsprechenden Rohrbündels in horizontaler Richtung begrenzt. Hierbei ist die Verteilereinrichtung ihrerseits nicht direkt mit dem Reaktormantel des Reaktors verbunden, sondern ist vielmehr indirekt über die Verbindung der U-förmigen Rohre mit dem Boden mit dem Reaktormantel verbunden. Dadurch können Probleme durch Spannungen zwischen Reaktor, U-förmigen Rohren und Verteilereinrichtung, hervorgerufen durch die thermischen Längenänderungen, vermieden werden.

In einer Ausführungsform wird die Verteilerplatte mit den jeweiligen Schenkeln des mindestens einen U-förmigen Rohres nahe des unteren Endes des U-förmigen Rohrs verbunden, beispielsweise verschweißt, wobei sich ein Abschnitt des U-förmigen Rohrs, der zumindest einen Teil des bogenförmigen Bereichs umfasst, unterhalb der Verteilerplatte befindet. Da dieser Abschnitt des U-förmigen Rohrs nicht in Kontakt mit der Schwefelschmelze steht, sondern vielmehr in den Bereich der unter der Verteilereinrichtung aufgestauten Wasserstoffblase ragt, enthält das U-förmige Rohr in diesem Abschnitt vorzugsweise keine Katalysatorschüttung. Somit findet keine Umsetzung zu H$_2$S statt und es entsteht keine exotherme abzuführende Reaktionswärme. Innerhalb des mindestens einen U-förmigen Rohres können Unterteilungen vorgesehen sein, die den Bereich der Katalysatorschüttung von dem Bereich ohne Schüttung trennt, wobei die Unterteilungen jedoch für Edukte und Produkte der H$_2$S-Herstellung durchlässig sein müssen.

Bei der vorliegenden Erfindung sind vorzugsweise eine Zuführ- und eine Verteilereinrichtung für gasförmigen Wasserstoff in einem unteren Abschnitt des Reaktors, z.B. nahe der unteren Haube, vorgesehen. Der mittels der Zuführeinrichtung in die Schwefelschmelze eingeleitete Wasserstoff steigt in Form von durch die Verteilereinrichtung verteilten Gasblasen durch die Schmelze, wodurch Schwefel aus der Schmelze gestrippt wird, und staut sich (z.B. unterhalb eines oberen Bodens des Reaktors) in dem Eduktbereich des Reaktors als Eduktgemisch auf, das über eine Phasengrenze mit der Schwefelschmelze in Kontakt steht.

Das Eduktgemisch enthält gasförmigen Wasserstoff und Schwefel in einem Molverhältnis, welches sich durch die herrschenden Verfahrensparameter, d.h. Temperatur, Druck und die Menge an eingeleitetem Wasserstoff, dem Verdampfungsgleichgewicht des Schwefels entsprechend, einstellt. Hierbei kann durch die Wahl der Verfahrensparameter ein Überschuss an Wasserstoff oder Schwefel oder auch ein der Reaktionsstöchiometrie entsprechendes Molverhältnis eingestellt werden, je nach der gewünschten Reaktionsführung der Umsetzung zu H$_2$S. Bevorzugt wird bei der vorliegenden Erfindung ein Überschuss an Schwefel eingestellt, um einen möglichst vollständigen Umsatz von Wasserstoff mit Schwefel zu H$_2$S zu erzielen. Vorzugsweise beträgt dabei der Schwefelüberschuss pro Kilogramm erzeugtem H$_2$S zwischen 0,2 und 3,0, insbesondere zwischen 0,4 und 2,2, bevorzugt zwischen 0,6 und 1,6, besonders bevorzugt zwischen 0,9 und 1,2.

Das erfindungsgemäße Verfahren zur kontinuierlichen Herstellung von H$_2$S umfasst vorzugsweise die Umsetzung eines Eduktgemischs, welches im Wesentlichen gasförmigen Schwefel und Wasserstoff enthält, an einem Katalysator, wobei eine Schwefelschmelze zumindest in einem unteren Teil des Reaktors bereitgestellt wird, in welche gasförmiger Wasserstoff eingeleitet wird. Bei dem Verfahren kann das Eduktgemisch zum Beispiel aus einem Eduktbereich in einen Schenkel mindestens eines U-förmigen Rohres durch mindestens eine oberhalb der Schwefelschmelze angeordnete Eintrittsöffnung eingeleitet, entlang eines Strömungsweges durch das mindestens eine U-förmige Rohr, welches teilweise in Kontakt mit der Schwefelschmelze steht, durchgeleitet und an einem im Strömungsweg in einem Reaktionsbereich angeordneten Katalysator umgesetzt werden. Ein Produkt kann aus mindestens einer Austrittsöffnung in einem anderen Schenkel des U-förmigen Rohres in einen (vorzugsweise von dem Eduktbereich getrennten) Produktbereich geleitet werden. Vorzugsweise wird die $H_2S$-Synthese in dem bereits beschriebenen Reaktor durchgeführt.

Das bevorzugte Verfahren zur Synthese von $H_2S$ wird in dem Reaktor zum Beispiel bei Temperaturen des Eduktgemischs und des den Katalysator enthaltenden Reaktionsbereichs von 300 bis 450°C, bevorzugt von 320 bis 425°C, besonders bevorzugt von 330 bis 400°C durchgeführt, wodurch die Korrosionsbelastung der gewählten Materialien der konstruktiven Elemente gering gehalten wird. Vorzugsweise beträgt die Temperatur der Schwefelschmelze zwischen 300 und 450°C, insbesondere zwischen 320 und 425°C, bevorzugt zwischen 330 und 400°C, besonders bevorzugt zwischen 350 und 360°C. Die Temperatur im Eduktraum über dem Schwefelbad beträgt vorzugsweise zwischen 300 und 450°C, insbesondere zwischen 320 und 425°C, bevorzugt zwischen 330 und 400°C, besonders bevorzugt zwischen 350 und 360°C. Das aus den U-förmigen Rohren in den Produktraum austretende Produktgemisch hat vorzugsweise eine Temperatur zwischen 300 und 450°C, insbesondere zwischen 320 und 425°C, bevorzugt zwischen 330 und 400°C, besonders bevorzugt zwischen 350 und 360°C. Die Drücke im Mantelraum des Reaktors und im Inneren der U-förmigen Rohre betragen vorzugsweise 0,5 bis 10 bar, insbesondere 0,75 bis 5 bar, bevorzugt 1 bis 3 bar und besonders bevorzugt 1,1 bis 1,4 bar absolut.

Der in dem bevorzugten Verfahren in den Reaktor eingeleitete Wasserstoff wird vorzugsweise an einer im unteren Abschnitt des Reaktors vorgesehenen Verteilereinrichtung in die Schwefelschmelze dispergiert. Zum einen erfolgt die Wasserstoffverteilung in die über der Verteilerplatte enthaltende Schwefelschmelze bevorzugt über eine im Reaktor horizontal angeordnete Verteilerplatte der Verteilereinrichtung durch die darin vorgesehenen Durchgangsöffnungen und/oder über den Randbereich des sich nach unten erstreckenden Randes der Verteilereinrichtung aus einer unter der Verteilerplatte aufgestauten Wasserstoffblase. Kommt es z.B. zu einer Hemmung des Durchtritts des Wasserstoffs durch die Durchgangsöffnungen, beispielsweise durch darin abgelagerten Schwefel, staut sich die Wasserstoffblase in dem durch die Verteilerplatte und den sich nach unten erstreckenden Rand der Verteilereinrichtung begrenzten Raum auf, so dass zum anderen Wasserstoff über den Randbereich des sich nach unten erstreckenden Randes in die diesen umgebende Schwefelschmelze verteilt wird. Dabei gelangt der Wasserstoff aus der Wasserstoffblase unter der Verteilereinrichtung durch einen Spalt zwischen Verteilereinrichtung und Reaktormantel in die über der Verteilereinrichtung vorhandene Schwefelschmelze. Auf diese Weise ist gewährleistet, dass der Wasserstoff in ausreichender Menge während der kontinuierlichen Herstellung von $H_2S$ in der Schwefelschmelze verteilt wird.

Die Verdampfungsrate des Schwefels wird bei der vorliegenden Erfindung vorzugsweise so eingestellt, dass das Eduktgemisch einen Schwefelüberschuss enthält. Der überschüssige Schwefel wird dann mit dem Produkt aus dem Produktbereich des Reaktors abgeleitet und nachträglich als Schmelze abgeschieden. Dieser flüssige Schwefel kann z.B. über eine in dem oberen Teilbereich des Reaktors angeordnete Sammel- und Ableitkonstruktion, unter anderem umfassend einen Sammelboden und ein davon ausgehendes, in die Schwefelschmelze getauchtes Rücklaufrohr, in die im unteren Teilbereich des Reaktors enthaltene Schwefelschmelze zurückgeführt werden. Vorzugsweise erfolgt eine Kühlung der aus dem Reaktor austretenden $H_2S$-Gase in einem Wärmetauscher, der als Kühler dient, wobei der überschüssige Schwefel auskondensiert und über die Sammel- und Ableitkonstruktion zurück in die Schwefelschmelze geleitet wird. Als Kühlmedium kann in einem Sekundärkreislauf warmes Druckwasser eingesetzt werden.

Gemäß einer bevorzugten Ausführungsform des erfindungsgemäßen Verfahrens umfasst dieses die Schritte

• Reagieren von gasförmigem Schwefel und Wasserstoff an einem (vorzugsweise festen) Katalysator in einem Reaktor bei einem Schwefelüberschuss zum Erhalten eines $H_2S$-haltigen Rohgasstroms,

• Kühlen des Rohgasstroms auf 123 bis 165 °C, bevorzugt 127 bis 163 °C, besonders bevorzugt 130 bis 162 °C, insbesondere 135 bis 161 °C, ganz besonders bevorzugt 150 bis 160 °C, in einem Kühler zum Abscheiden von überschüssigem Schwefel und

• Leiten des Rohgasstroms aus dem Kühler in den das katalytisch wirksame Material, vorzugsweise die Aktivkohle und/oder das Molsieb enthaltenden Behälter.

Der aus dem Reaktor geleitete $H_2S$-haltige Rohgasstrom hat dabei vorzugsweise eine Temperatur von 290 bis 400 °C. Der überschüssige Schwefel wird zumindest teilweise in dem Kühler auskondensiert. Als Kühlmedium kann zum Beispiel 120 °C warmes Druckwasser in einem Sekundärkreis dienen. Der in dem Kühler anfallende Schwefel wird in den Reaktor zur Herstellung von $H_2S$ zurückgeführt. Der Schwefel kann dazu über eine spezielle Sammel- und Ableitkonstruktion in die Schwefelschmelze im Mantelraum des Reaktors zurückgeführt werden.

Gemäß dem erfindungsgemäßen Verfahren wird eine Leitung zwischen dem Kühler und dem Reaktor bereitgestellt, durch die der Rohgasstrom in einer Richtung von dem Reaktor in den Kühler und durch die zurückgeführter Schwefel in einer entgegengesetzten Richtung von dem Kühler in den Reaktor geleitet wird. Der in dem Kühler aus dem $H_2S$-haltigen Rohgasstrom auskondensierte Schwefel kann beispielsweise am Boden desselben Rohres in den Reaktor zurücklaufen, durch das der $H_2S$-haltige Rohgasstrom aus dem Produktbereich des Reaktors in den Kühler geführt wird. Dadurch kann eine zusätzliche Rückführleitung vermieden werden. Diese vereinfachte Rohrleitungsführung hat u.a. den Vorteil, dass zwei Flansche gespart werden können, die mögliche Leckagestellen darstellen würden, aus denen der hochgiftige Schwefelwasserstoff austreten könnte. Ein weiterer Vorteil ist, dass die gemeinsame Leitung wie ein Gegenstromwärmetauscher wirkt, in dem der rücklaufende Schwefel den Schwefelwasserstoff kühlt. Der Kühler kann somit für eine geringere Kühlleistung konzipiert werden. Der rücklaufende Schwefel kühlt den Schwefelwasserstoff bereits direkt nach dem Eintritt in den Produktbereich des Reaktors, so dass der Produktbereich vor zu heißen Gaszonen und damit vor Korrosion geschützt wird.

Dabei ist es überraschend, dass zum Beispiel mit 350 °C aus dem Reaktor austretender Schwefel, der bereits wieder gering viskos ist, und zum Beispiel mit 120 °C zurücklaufender Schwefel, der noch nicht hochviskos ist, im Gegenstrom aneinander vorbeigeführt werden können, ohne dass hochviskoser Schwefel mit 200 °C das Verbindungsrohr blockiert. Es ist zwar bekannt, dass der aus dem Reaktor kommende Schwefel mit $H_2S$ gesättigt ist und dass $H_2S$ die Viskosität von Schwefel ca. um den Faktor 100 reduziert, dies kann jedoch nicht als ausreichend angesehen werden.

Gemäß einer bevorzugten Ausführungsform der vorliegenden Erfindung wird der im Sumpf des das katalytisch wirksame Material, vorzugsweise die Aktivkohle und/oder das Molsieb enthaltenden Behälters aufgefangene Schwefel über den Kühler in den Reaktor zurückgeführt. Vorzugsweise wird dazu eine Leitung zwischen dem Kühler und dem das katalytisch wirksame Material, vorzugsweise die Aktivkohle und/oder das Molsieb enthaltenden Behälter bereitgestellt, durch die der Rohgasstrom in einer Richtung von dem Kühler in den Behälter und durch die im Sumpf des Behälters aufgefangener Schwefel in einer entgegengesetzten Richtung von dem Behälter in den Kühler geleitet wird. Der sich in dem Behälter zum Beispiel bei der Zersetzung von $H_2S_x$ bildende Schwefel läuft aus dem katalytisch wirksamen Material, vorzugsweise aus der Aktivkohle (zum Beispiel einem Aktivkohlebett) und/oder dem Molsieb ab und wird im Sumpf des Behälters gesammelt. Die Temperaturen in dem Behälter sind so gewählt, dass der Schwefel flüssig ist und daher in den Sumpf und von dort aus in die Leitung zum Kühler fließen kann. Durch das Anordnen einer einzigen Leitung zwischen dem das katalytisch wirksame Material, vorzugsweise die Aktivkohle und/oder das Molsieb enthaltenden Behälter und dem Kühler zum Leiten des gekühlten Rohgasstroms in einer Richtung von dem Kühler in den Behälter und zum Zurückführen von Schwefel in der entgegengesetzten Richtung aus dem Sumpf des Behälters in den Kühler werden wiederum Flansche eingespart, die mögliche Leckagestellen darstellen können. Die Rohrleitungsführung vereinfacht sich.

Vorzugsweise werden die flüssigen oder gasförmigen Schwefel führenden Leitungen der Vorrichtung, insbesondere die Leitung zwischen dem die Aktivkohle und/oder das Molsieb enthaltenden Behälter und dem Kühler, zwischen Reaktor und Kühler und/oder die Schwefelzulaufleitung des Reaktors mit Gefälle ausgeführt. Ferner werden diese Leitungen bevorzugt mit einer Temperierung auf 100 bis 170 °C ausgeführt. Dazu geeignet ist die Verwendung von Doppelmantelleitungen oder die Ummantelung der Leitungen mit temperierbaren Wellschläuchen oder eine elektrische Begleitheizung. Bevorzugt werden Doppelmantelleitungen oder Wellschläuche verwendet. Als Temperiermedien im Doppelmantel oder im Wellschlauch sind beispielsweise Wasserdampf oder flüssiges Wasser unter erhöhtem Druck geeignet.

Anhand der Zeichnung wird die Erfindung nachstehend näher erläutert.

Es zeigt

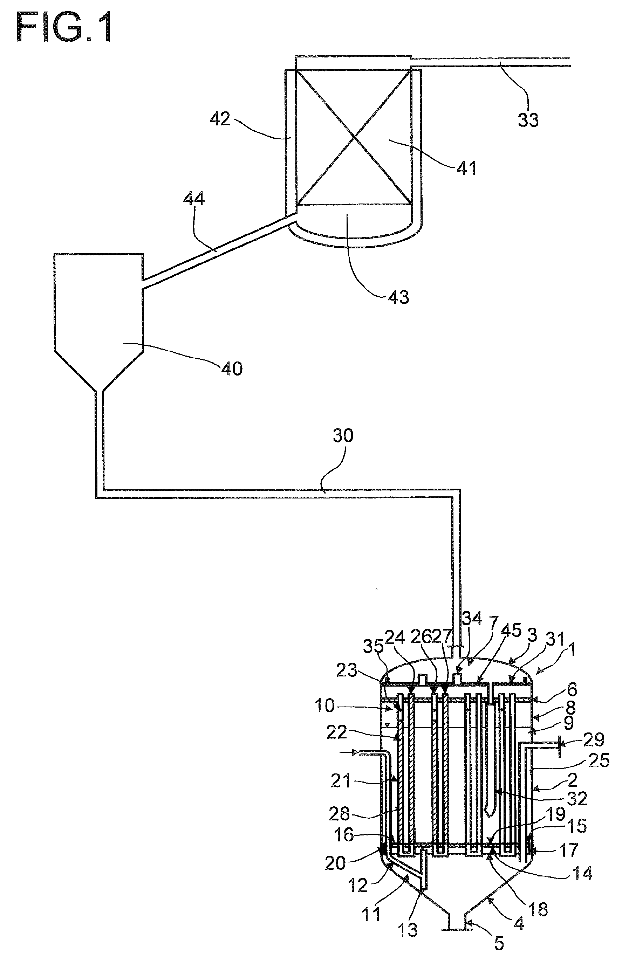

Figur 1    eine schematische Darstellung einer bevorzugten Ausführungsform einer erfindungsgemäßen Vorrichtung.

Die Vorrichtung gemäß Figur 1 ist zur Durchführung des erfindungsgemäßen Verfahrens geeignet. Sie umfasst einen Reaktor 1 zum Umsetzen von Schwefel und Wasserstoff, einen mit dem Reaktor 1 verbundenen Kühler 40 zum Kühlen eines aus dem Reaktor 1 geleiteten $H_2S$-haltigen Rohgasstroms auf 114 bis 165 °C, und einen mit dem Kühler 40 verbundenen, Aktivkohle 41 enthaltenden Behälter 42 mit einem Sumpf 43 zum Auffangen von in dem Behälter 42 bei 114 bis 165 °C aus einem Polysulfane enthaltenden Rohgasstrom anfallenden Schwefel. Mit dem Sumpf 43 des Behälters 42 ist eine Leitung 44 verbunden, die in den Kühler 40 mündet, zum Zurückführen von Schwefel (über den Kühler 40) in den Reaktor 1.

Der Reaktor 1 ist an beiden Seiten eines zylindrischen Körpers 2 mit Hauben 3, 4 geschlossen. An der oberen Haube 3 kann ein Produkt abgezogen werden. An der unteren Haube 4 befindet sich ein Ablassstutzen 5, um eventuell den Inhalt des Reaktors 1 vollständig abzulassen. In einem oberen Abschnitt des Reaktors 1 ist ein Boden 6 vorgesehen, der einen oberen Teilbereich mit einem Produktbereich 7 von einem unteren Teilbereich 8 abtrennt. Der Boden 6 ist mit einem Reaktormantel 25 des Reaktors 1 verbunden. Der untere Teilbereich 8 ist teilweise mit einer Schwefelschmelze 9 gefüllt, die über eine Phasengrenze mit einem Eduktbereich 10 in Kontakt steht, der nach oben durch den Boden 6 begrenzt wird. Der Eduktbereich 10 enthält hauptsächlich gasförmigen Wasserstoff und Schwefel.

Der Wasserstoff wird über eine Zuführeinrichtung 11 in einen unteren Abschnitt des Reaktors 1, beispielsweise in der unteren Haube 4, in die Schwefelschmelze 9 eingeleitet. Die Zuführeinrichtung 11 umfasst eine schräg verlaufende Leitung 12, die seitlich in ein im Reaktor 1 senkrecht angeordnetes, nach oben und unten offenes Rohr 13 mündet. Das obere Ende des Rohres 13 ragt in einen Raum 14 hinein, der durch eine Verteilereinrichtung 15 begrenzt wird. Die Verteilereinrichtung 15 umfasst eine im Reaktor 1 horizontal angeordnete Verteilerplatte 16 und einen sich nach unten erstreckenden Rand 17, der einen vorzugsweise zackenförmig ausgebildeten Randbereich 18 aufweist. Der über die Zuführeinrichtung 11 eingeleitete Wasserstoff steigt in dem senkrechten Rohr 13 nach oben und staut sich unterhalb der Verteilerplatte 16 zu einer Wasserstoffblase auf. Durch Durchgangsöffnungen 19 in der Verteilerplatte 16 dispergiert der Wasserstoff in die darüber befindliche Schwefelschmelze 9 und steigt innerhalb der Schwefelschmelze 9 in Form von Gasblasen nach oben, wobei Schwefel aus der Schwefelschmelze 9 gestrippt wird. Dadurch bildet sich oberhalb der Schwefelschmelze 9 in dem Eduktbereich 10 ein Eduktgemisch, enthaltend gasförmigen Wasserstoff und Schwefel, aus.

Sind die Durchgangsöffnungen 19 in der Verteilerplatte 16 für den Wasserstoffdurchtritt versperrt, so kann der Wasserstoff auch aus der unterhalb der Verteilerplatte 16 aufgestauten Wasserstoffblase über den Randbereich 18 in einen Spalt 20 zwischen dem Reaktormantel 25 und dem Rand 17 der Verteilereinrichtung 15 in die Schwefelschmelze 9 dispergieren.

Im zylindrischen Körper des Reaktors 1 sind Rohre 21 angeordnet, welche U-förmig ausgebildet sind. Die U-förmigen Rohre 21 sind an ihren beiden Schenkeln 26,27 mit dem Boden 6 verbunden. Die Verbindung der Schenkel 26, 27 mit dem Boden 6 kann durch eine Schweißnaht hergestellt werden. Die U-förmigen Rohre 21 tauchen teilweise in die Schwefelschmelze 9 ein, wodurch die Möglichkeit eines direkten Wärmeaustausches zwischen dem Innenraum der Rohre 21 und der Schwefelschmelze 9 über die äußere Mantelfläche 28 der Rohre 21 gegeben ist. Innerhalb jedes U-förmigen Rohrs 21 ist ein Katalysatorfestbett 22 angeordnet, welches in beiden Schenkeln 26, 27 der U-förmigen Rohre 21 vorgesehen ist.

Wie in Figur 1 gezeigt, ist die Verteilereinrichtung 15 mit den U-förmigen Rohren 21 verbunden, wobei ein Teil und insbesondere der Übergang von einem Schenkel 26 zum zweiten Schenkel 27 der jeweiligen U-förmigen Rohre 21 unterhalb der Verteilerplatte 16 durch den Raum 14 verläuft. Da dieser Abschnitt der U-förmigen Rohre 21 in die aufgestaute Wasserstoffblase ragt und nicht in direktem Kontakt mit der Schwefelschmelze 9 steht, enthält dieser Abschnitt keinen Katalysator. Zwischen der Verteilereinrichtung 15 und dem Reaktormantel 25 ist der Spalt 20 positioniert. Die Verteilereinrichtung 15 ist nicht direkt mit dem Reaktormantel 25 verbunden.

In dem Reaktor 1 läuft die Synthese von Schwefelwasserstoff wie folgt ab. Ein Eduktgemisch tritt aus dem Eduktbereich 10 durch eine oder mehrere am Umfang eines Schenkels 26 jedes der U-förmigen Rohre 21 angeordnete Eintrittsöffnungen 23 in den Innenraum des einen Schenkels 26 des U-förmigen Rohres 21 ein, durchströmt die darin enthaltene Katalysatorschüttung 22, die durch eine vorgelagerte Inertschüttung ergänzt sein kann und wird entlang des Strömungsweges im Katalysatorfestbett 22 enthaltenden Reaktionsbereich weitgehend zu Schwefelwasserstoff umgesetzt. Das Produkt tritt an dem zweiten Schenkel 27 über mindestens eine Austrittsöffnung 24 in den Produktbereich 7 aus und kann gesammelt und von dort über Haube 3 ausgeleitet werden. Durch den direkten Kontakt der U-förmigen Rohre 21 mit der Schwefelschmelze 9 wird die bei der Umsetzung zu $H_2S$ freiwerdende Reaktionswärme aus dem Katalysatorfestbett 22 in die Schwefelschmelze 9 über die äußere Mantelfläche 28 der U-förmigen Rohre entlang des Reaktionsbereichs abgegeben und für eine Schwefelverdampfung genutzt.

Um die Schwefelschmelze 9 während des Verfahrens in etwa in gleicher Höhe zu halten, werden gasförmiger Wasserstoff und flüssiger Schwefel in entsprechenden Mengen dem Reaktor1 kontinuierlich über die Zuführeinrichtung 11 und eine Schwefeleinleitung 29 zugeführt.

Zwischen dem Reaktor 1 und dem Kühler 40 ist eine erste Leitung 30 angeordnet, die zum Leiten des Rohgasstroms von dem Reaktor 1 in den Kühler 40 und zum Zurückführen von Schwefel in der entgegengesetzten Richtung aus dem Kühler 40 in den Reaktor 1 dient. Aus der ersten Leitung 30 gelangt der flüssige Schwefel zu einer im oberen Teilbereich des Reaktors 1 angeordneten Sammel- und Ableitkonstruktion 45. Diese Sammel- und Ableitkonstruktion 45 umfasst einen Sammelboden 31, an dem zum Durchleiten des Produktes aus dem unterhalb des Sammelbodens 31 befindlichen Produktbereich 7 in den darüber befindlichen Produktbereich 7 Einlassstutzen 34 angeordnet sind und einen Rand 35. Der abgeschiedene flüssige Schwefel wird auf einem Sammelboden 31, welcher horizontal in dem Produktbereich 7 des Reaktors 1 angeordnet ist, gesammelt und über ein in die Schwefelschmelze 9 eingetauchtes Rücklaufrohr 32 in die in dem unteren Teilbereich des Reaktors 8 enthaltene Schwefelschmelze 9 rückgeführt. Der Reaktor 1 ist bevorzugt isoliert, so dass der Energieverbrauch möglichst gering ist.

In dem Kühler 40 wird der aus dem Reaktor 1 stammende $H_2S$-haltige Rohgasstrom von ca. 350 °C auf 114 bis 165 °C abgekühlt. Dabei wird überschüssiger Schwefel auskondensiert, der durch die erste Leitung 30 in den Reaktor 1 zurückläuft. In dem Kühler 40 liegen Bedingungen vor, bei denen sich Polysulfane ($H_2S_x$) bilden können. Aus dem Kühler 40 wird ein $H_2S$-haltiger Rohgasstrom, der Polysulfane enthält, durch die zweite Leitung 44 in den die Aktivkohle 41 enthaltenden Behälter 42 geleitet. Die zwischen dem die Aktivkohle 41 enthaltenden Behälter 42 und dem Kühler 40 angeordnete zweite Leitung 44 dient sowohl zum Leiten des gekühlten Rohgasstroms in einer Richtung aus dem Kühler 40 in den Behälter 42, als auch zum Zurückführen von Schwefel in der entgegengesetzten Richtung aus dem Sumpf 43 des Behälters 42 in den Kühler 40.

Der mittels der Aktivkohle 41 gereinigte H$_2$S-haltige Strom wird aus dem Behälter 42 über eine weitere Leitung 33 abgeleitet.

Anstelle der Aktivkohle 41 als katalytisch wirksamem Material wird in einer alternativen bevorzugten Ausführungsform ein Molsieb eingesetzt.

Bezugszeichenliste

| | | | | |
|---|---|---|---|---|
| 1 | Reaktor | | 40 | Kühler |
| 2 | Reaktorkörper | | 41 | Aktivkohle |
| 3 | Obere Haube | | 42 | Behälter |
| 4 | Untere Haube | | 43 | Sumpf |
| 5 | Ablassstutzen | | 44 | zweite Leitung |
| 6 | Boden | | 45 | Sammel- und Ableitkonstruktion |
| 7 | Produktbereich | | | |
| 8 | Unterer Teilbereich des Reaktors | | | |
| 9 | Schwefelschmelze | | | |
| 10 | Eduktbereich | | | |
| 11 | Zuführeinrichtung für Wasserstoff | | | |
| 12 | Leitung | | | |
| 13 | Senkrecht angeordnetes Rohr | | | |
| 14 | Raum | | | |
| 15 | Verteilereinrichtung | | | |
| 16 | Verteilerplatte | | | |
| 17 | Rand | | | |
| 18 | Randbereich | | | |
| 19 | Durchgangsöffnungen | | | |
| 20 | Spalt | | | |
| 21 | Rohre | | | |
| 22 | Katalysatorfestbett | | | |
| 23 | Eintrittsöffnung | | | |
| 24 | Austrittsöffnung | | | |
| 25 | Reaktormantel | | | |
| 26 | Erster Schenkel | | | |
| 27 | Zweiter Schenkel | | | |
| 28 | Äußere Mantelfläche | | | |
| 29 | Schwefeleinleitung | | | |
| 30 | erste Leitung | | | |
| 31 | Sammelboden | | | |
| 32 | Rücklautrohr | | | |
| 33 | Leitung | | | |
| 34 | Einlassstutzen | | | |
| 35 | Rand | | | |

**Patentansprüche**

1. Verfahren zur kontinuierlichen Herstellung von Schwefelwasserstoff H$_2$S, wobei in einem bei der Herstellung anfallenden H$_2$S-haltigen Rohgasstrom Polysulfane (H$_2$S$_x$) enthalten sind, **dadurch gekennzeichnet, dass** der Rohgasstrom bei Temperaturen von 114 bis 165 °C durch in einem Behälter (42) enthaltenes katalytisch wirksames Material (41) geleitet wird und dabei anfallender Schwefel im Sumpf (43) des Behälters (42) aufgefangen und zur Herstellung von H$_2$S zurückgeführt wird, wobei eine Leitung (30) zwischen einem Kühler (40) und dem Reaktor (1) bereitgestellt wird, durch die der Rohgasstrom in einer Richtung von dem Reaktor (1) in den Kühler (40) und durch die zurückgeführter Schwefel in einer entgegengesetzten Richtung von dem Kühler (40) in den Reaktor (1) geleitet wird.

2. Verfahren gemäß Anspruch 1, **dadurch gekennzeichnet, dass** der Rohgasstrom mit einer Eintrittstemperatur von 123 bis 165 °C in den Behälter (42) eingeleitet, durch katalytisch wirksames Material in Form von Aktivkohle (41) hindurchgeleitet und mit einer Austrittstemperatur von 121 bis 160°C aus dem Behälter (42) herausgeleitet wird.

3. Verfahren gemäß Anspruch 1, **dadurch gekennzeichnet, dass** der Rohgasstrom mit einer Eintrittstemperatur von 123 bis 165 °C in den Behälter (42) eingeleitet, durch katalytisch wirksames Material in Form von Molsieb hindurchgeleitet und mit einer Austrittstemperatur von 121 bis 160°C aus dem Behälter (42) herausgeleitet wird.

4. Verfahren gemäß einem der Ansprüche 1 bis 3, umfassend die Schritte

   • Reagieren von gasförmigem Schwefel und Wasserstoff an einem Katalysator (22) in einem Reaktor (1) bei einem Schwefelüberschuss zum Erhalten eines $H_2S$-haltigen Rohgasstroms,
   • Kühlen des Rohgasstroms auf 114 bis 165 °C in einem Kühler (40) zum Abscheiden von überschüssigem Schwefel und
   • Leiten des Rohgasstroms aus dem Kühler (40) in den das katalytisch wirksame Material (41) enthaltenden Behälter (42).

5. Verfahren gemäß Anspruch 4, **dadurch gekennzeichnet, dass** in dem Kühler (40) anfallender Schwefel in den Reaktor (1) zur Herstellung von $H_2S$ zurückgeführt wird.

6. Verfahren gemäß Anspruch 4 oder 5, **dadurch gekennzeichnet, dass** der im Sumpf (43) des das katalytisch wirksame Material (41) enthaltenden Behälters (42) aufgefangene Schwefel über den Kühler (40) in den Reaktor (1) zurückgeführt wird.

7. Verfahren gemäß Anspruch 6, **dadurch gekennzeichnet, dass** eine Leitung (44) zwischen dem Kühler (40) und dem das katalytisch wirksames Material (41) enthaltenden Behälter (42) bereitgestellt wird, durch die der Rohgasstrom in einer Richtung von dem Kühler (40) in den Behälter (42) und durch die im Sumpf (43) des Behälters (42) aufgefangener Schwefel in einer entgegengesetzten Richtung von dem Behälter (42) in den Kühler (40) geleitet wird.

8. Vorrichtung zur kontinuierlichen Herstellung von Schwefelwasserstoff $H_2S$, umfassend einen Reaktor (1) zum Umsetzen von Schwefel und Wasserstoff, einen mit dem Reaktor (1) verbundenen Kühler (40) zum Kühlen eines aus dem Reaktor (1) geleiteten $H_2S$-haltigen Rohgasstroms auf 114 bis 165 °C, einen mit dem Kühler (40) verbundenen, katalytisch wirksames Material (41) enthaltenden Behälter (42) mit einem Sumpf (43) zum Auffangen von in dem Behälter (42) bei 114 bis 165 °C aus dem Polysulfane ($H_2S_x$) enthaltenden Rohgasstrom anfallendem Schwefel und eine mit dem Sumpf (43) des Behälters (42) verbundene Leitung (44), die in den Kühler (40) oder in den Reaktor (1) mündet, zum Zurückführen von Schwefel, **dadurch gekennzeichnet, dass** zwischen dem Reaktor (1) und dem Kühler (40) eine erste Leitung (30) angeordnet ist zum Leiten des Rohgasstroms in einer Richtung von dem Reaktor (1) in den Kühler (40) und zum Zurückführen von Schwefel in einer entgegengesetzten Richtung aus dem Kühler (40) in den Reaktor (1).

9. Vorrichtung gemäß Anspruch 8, **dadurch gekennzeichnet, dass** zwischen dem das katalytisch wirksame Material (41) enthaltenden Behälter (42) und dem Kühler (40) eine zweite Leitung (44) angeordnet ist zum Leiten des gekühlten Rohgasstroms in einer Richtung von dem Kühler (40) in den Behälter (42) und zum Zurückführen von Schwefel in einer entgegengesetzten Richtung aus dem Sumpf (43) des Behälters (42) in den Kühler (40).

**Claims**

1. A process for continuously preparing hydrogen sulfide $H_2S$, polysulfanes ($H_2S_x$) being present in an $H_2S$-containing crude gas stream obtained in the preparation, which comprises passing the crude gas stream at temperatures of from 114 to 165°C through catalytically active material (41) present in a vessel (42) and collecting sulfur obtained in the bottom (43) of the vessel (42) and recycling it to the preparation of $H_2S$, wherein a line (30) is provided between a cooler (40) and the reactor (1), through which the crude gas stream is passed in a direction from the reactor (1) into the cooler (40) and through which the recycled sulfur is passed in an opposite direction from the cooler (40) into the reactor (1).

2. The process according to claim 1, wherein the crude gas stream is introduced into the vessel (42) with an entrance temperature of from 123 to 165°C, passed through catalytically active material in the form of activated carbon (41) and passed out of the vessel (42) with an exit temperature of from 121 to 160°C.

3. The process according to claim 1, wherein the crude gas stream is introduced into the vessel (42) with an entrance temperature of from 123 to 165°C, passed through catalytically active material in the form of molecular sieve and passed out of the vessel (42) with an exit temperature of from 121 to 160°C.

4. The process according to any of claims 1 to 3, comprising the steps of

   • reacting gaseous sulfur and hydrogen over a catalyst (22) in a reactor (1) with a sulfur excess to obtain an $H_2S$-containing crude gas stream,
   • cooling the crude gas stream to from 114 to 165°C in a cooler (40) to separate out excess sulfur and
   • passing the crude gas stream from the cooler (40) into the vessel (42) comprising the catalytically active material (41).

5. The process according to claim 4, wherein sulfur obtained in the cooler (40) is recycled into the reactor (1) for the preparation of $H_2S$.

6. The process according to claim 4 or 5, wherein the sulfur collected in the bottom (43) of the vessel (42) comprising the catalytically active material (41) is recycled into the reactor (1) via the cooler (40).

7. The process according to claim 6, wherein a line (44) is provided between the cooler (40) and the vessel (42) comprising the catalytically active material (41), through which the crude gas stream is passed in one direction from the cooler (40) into the vessel (42) and through which sulfur collected in the bottom (43) of the vessel (42) is passed in an opposite direction from the vessel (42) into the cooler (40).

8. An apparatus for continuously preparing hydrogen sulfide $H_2S$, comprising a reactor (1) for converting sulfur and hydrogen, a cooler (40) which is connected to the reactor (1) and is for cooling an $H_2S$-containing crude gas stream passed out of the reactor (1) to from 114 to 165°C, a vessel (42) which is connected to the cooler (40), comprises catalytically active material (41) and has a bottom (43) for collecting sulfur obtained from the crude gas stream comprising polysulfanes ($H_2S_x$) in the vessel (42) at from 114 to 165°C, and a line (44) which is connected to the bottom (43) of the vessel (42) and opens into the cooler (40) or into the reactor (1), for recycling sulfur, wherein a first line (30) is arranged between the reactor (1) and the cooler (40) for passing the crude gas stream in a direction from the reactor (1) into the cooler (40) and for recycling sulfur in an opposite direction out of the cooler (40) into the reactor (1).

9. The apparatus according to claim 8, wherein a second line (44) is arranged between the vessel (42) comprising the catalytically active material (41) and the cooler (40) for passing the cooled crude gas stream in one direction from the cooler (40) into the vessel (42) and for recycling sulfur in an opposite direction out of the bottom (43) of the vessel (42) into the cooler (40).

**Revendications**

1. Procédé de fabrication continue de sulfure d'hydrogène $H_2S$, selon lequel des polysulfanes ($H_2S_x$) sont contenus dans un courant gazeux brut contenant $H_2S$ formé lors de la fabrication, **caractérisé en ce que** le courant gazeux brut est conduit à des températures de 114 à 165 °C au travers d'un matériau catalytiquement actif (41) contenu dans un contenant (42), et le soufre formé est recueilli au fond (43) du contenant (42) et recyclé pour la fabrication d'$H_2S$, une conduite (30) étant mise à disposition entre un refroidisseur (40) et le réacteur (1), par laquelle le courant gazeux brut est conduit dans une direction depuis le réacteur (1) dans le refroidisseur (40) et par laquelle le soufre recyclé est conduit dans une direction opposée depuis le refroidisseur (40) dans le réacteur (1).

2. Procédé selon la revendication 1, **caractérisé en ce que** le courant gazeux brut est conduit dans le contenant (42) à une température d'entrée de 123 à 165 °C, traverse le matériau catalytiquement actif sous la forme de charbon actif (41) et est déchargé du contenant (42) à une température de sortie de 121 à 160 °C.

**3.** Procédé selon la revendication 1, **caractérisé en ce que** le courant gazeux brut est conduit dans le contenant (42) à une température d'entrée de 123 à 165 °C, traverse le matériau catalytiquement actif sous la forme d'un tamis moléculaire et est déchargé du contenant (42) à une température de sortie de 121 à 160 °C.

**4.** Procédé selon l'une quelconque des revendications 1 à 3, comprenant les étapes suivantes :

- la mise en réaction de soufre gazeux et d'hydrogène sur un catalyseur (22) dans un réacteur (1) avec un excès de soufre pour obtenir un courant gazeux brut contenant $H_2S$,
- le refroidissement du courant gazeux brut à une température de 114 à 165 °C dans un refroidisseur (40) pour la séparation du soufre en excès, et
- la conduite du courant gazeux brut depuis le refroidisseur (40) dans le contenant (42) contenant le matériau catalytiquement actif (41).

**5.** Procédé selon la revendication 4, **caractérisé en ce que** le soufre formé dans le refroidisseur (40) est recyclé dans le réacteur (1) pour la fabrication d'$H_2S$.

**6.** Procédé selon la revendication 4 ou 5, **caractérisé en ce que** le soufre recueilli au fond (43) du contenant (42) contenant le matériau catalytiquement actif (41) est recyclé dans le réacteur (1) par le biais du refroidisseur (40).

**7.** Procédé selon la revendication 6, **caractérisé en ce qu'**une conduite (44) est mise à disposition entre le refroidisseur (40) et le contenant (42) contenant le matériau catalytiquement actif (41), par laquelle le courant gazeux brut est conduit dans une direction depuis le refroidisseur (40) dans le contenant (42) et par laquelle le soufre recueilli au fond (43) du contenant (42) est conduit dans une direction opposée depuis le contenant (42) dans le refroidisseur (40).

**8.** Dispositif pour la fabrication continue de sulfure d'hydrogène $H_2S$, comprenant un réacteur (1) pour la mise en réaction de soufre et d'hydrogène, un refroidisseur (40) relié avec le réacteur (1) pour le refroidissement d'un courant gazeux brut contenant $H_2S$ déchargé du réacteur (1) à une température de 114 à 165 °C, un contenant (42) contenant un matériau catalytiquement actif (41), relié avec le refroidisseur (40), comprenant un fond (43) pour le recueillement du soufre formé dans le contenant (42) à une température de 114 à 165 °C à partir du courant gazeux brut contenant des polysulfanes ($H_2S_x$), et une conduite (44) reliée avec le fond (43) du contenant (42), qui débouche dans le refroidisseur (40) ou dans le réacteur (1), pour le recyclage de soufre, **caractérisé en ce qu'**une première conduite (30) est agencée entre le réacteur (1) et le refroidisseur (40) pour la conduite du courant gazeux brut dans une direction depuis le réacteur (1) dans le refroidisseur (40) et pour le recyclage de soufre dans une direction opposée depuis le refroidisseur (40) dans le réacteur (1).

**9.** Dispositif selon la revendication 8, **caractérisé en ce qu'**une seconde conduite (44) est agencée entre le contenant (42) contenant le matériau catalytiquement actif (41) et le refroidisseur (40), pour la conduite du courant gazeux brut refroidi dans une direction depuis le refroidisseur (40) dans le contenant (42), et pour le recyclage de soufre dans une direction opposée depuis le fond (43) du contenant (42) dans le refroidisseur (40).

# FIG.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1113446
- US 2863725 A
- DE 10245164 A1
- FR 2844208 B1
- US 5686056 A
- DE 558432
- US 2876071 A
- CS 263599
- GB 1193040 A

**In der Beschreibung aufgeführte Nicht-Patentliteratur**

- Ullmann's Encyclopedia of Industrial Chemistry. 2003, vol. 17, 291
- *Angew. Chem.,* 1962, vol. 74 (4
- Ullmann's Enzyklopädie der technischen Chemie. Verlag Chemie, vol. 21, 171
- Ullmann's Encyclopedia of industrial Chemistry. Wiley-VCH Verlag, 2003, vol. 17, 291-292
- **ROBERT H. PERRY et al.** Chemical Engineers Handbook. McGraw-Hill Book Company